# EUROPÄISCHE PATENTSCHRIFT

(11) **EP 0 659 465 B1**
(45) Veröffentlichungstag und Bekanntmachung des Hinweises auf die Patenterteilung: **07.04.1999**
(21) Anmeldenummer: 94120588.2
(22) Anmeldetag: 23.12.1994
(51) Int. Cl.: B01D 53/32, B01D 53/94, F01N 3/02, B01J 19/08

(54) **Verfahren und Vorrichtung zur Abgasreinigung**
Process and device for exhaust gas purification
Procédé et dispositif pour la purification de gaz d'échappement

(30) Priorität: 23.12.1993 DE 4344313; 04.07.1994 DE 4423397
(43) Veröffentlichungstag der Anmeldung: 28.06.1995
(73) Patentinhaber: FRAUNHOFER-GESELLSCHAFT ZUR FÖRDERUNG DER ANGEWANDTEN FORSCHUNG E.V., 80636 München (DE); FEV Motorentechnik GmbH & Co. KG, D-52078 Aachen (DE)
(72) Erfinder: Lepperhoff, Gerhard, D-52223 Stolberg (DE); Neff, Willi, B-4721 Kelmis (BE); Pochner, Klaus, D-52072 Aachen (DE)
(74) Vertreter: Leonhard, Frank Reimund, Dipl.-Ing.

(56) Entgegenhaltungen:
- WO-A-93/19838
- WO-A-94/23185
- DE-A- 4 338 995
- US-A- 4 956 152
- PATENT ABSTRACTS OF JAPAN vol. 017 no. 443 (M-1463) ,16.August 1993 & JP-A-05 098956 (HITACHI LTD) 20.April 1993,
- DATABASE WPI Section Ch, Week 8846 Derwent Publications Ltd., London, GB; Class E36, AN 88-327482 & JP-A-63 242 323 ( SUGIYAMA H) , 7.Oktober 1988

## Beschreibung

Die Erfindung betrifft ein Verfahren zur Abgasreinigung, basierend auf elektrischer Gasentladung, sowie eine Vorrichtung, mit deren Hilfe das Verfahren durchführbar ist.

Die Abgase aus Verbrennungsmotoren zählen zu den Hauptemittern von Luftschadstoffen. In den Abgasen aus Verkehr, Energieerzeugung und Industrie sind häufig toxische oder umweltschädliche Stoffe enthalten. Besondere Probleme stellen Stickoxide (NOₓ), Schwefeldioxid (SO₂), Kohlenwasserstoffe, Halogenverbindungen und Ruß dar.

Mit bekannten Abgasminderungstechnologien sind in der Zukunft nicht alle Abgasgrenzwerte (Kohlenwasserstoffe beim Ottomotor, Partikel und Stickoxide beim Dieselmotor) auf wirtschaftlich vertretbare Weise einzuhalten. Durch den Zwang, auch die CO₂-Emissionen zu vermindern, sind darüber hinaus bekannte Katalysatortechnologien nicht mehr einsetzbar. Die Rohstoffe für Edelmetallkatalysatoren sind in der Bundesrepublik nicht vorhanden und müssen aus dem Ausland eingeführt werden, weshalb sie starken Preisschwankungen unterliegen.

3-Wege-Katalysatoren zur gleichzeitigen CO-, HC- und NOₓ-Verminderung bei Ottomotoren sind schon lange Stand der Technik. Voraussetzung ist, den Motor immer mit stöchiometrischer Luft/Kraftstoffmischung zu betreiben. Nachteilig ist, daß in der Start- und Warmlaufphase der Katalysator mehrere Minuten braucht, ehe er die notwendige Betriebstemperatur erreicht. In dieser Zeit werden vor allem größere HC-Mengen emittiert. Weiterhin nachteilig ist, daß diese Katalysatoren in Gegenwart von Sauerstoff zwar die HC und CO oxidieren, die Stickoxide aber nicht reduziert werden.

Zur Verminderung des Kraftstoffverbrauchs und damit der CO₂-Emission wird und wurde der magere Ottomotor bzw. der direkteinspritzende Dieselmotor für den PKW-Antrieb entwickelt. In beiden Fällen ist im Abgas eine höhere O₂-Konzentration enthalten. Zur NO-Reduzierung in Gegenwart von O₂ sind Lean-NOₓ-Katalysatoren in der Vorentwicklung, die durch Zugabe von Reduktionsmitteln in selektiv arbeitenden Katalysatoren (u.a. Zeolith) den NOₓ-Ausstoß vermindern. Die Arbeitstemperaturbereiche und die Wirkungsgrade dieser Katalysatoren sind deutlich eingegrenzt, da z. B. bei >500°C die Zeolith-Keramik zerstört wird. Hohe thermische Energien sind jedoch für die Katalyse von Bedeutung und verhindern die Inaktivierung des Katalysators durch Bedeckung mit Ruß. Zudem ist die Zugabe eines Reduktionsmittels zum Abgas im mobilen Einsatz problematisch. Eine Serienfertigung dieser Technik ist noch nicht abzusehen.

Zur Verminderung der Kaltstart-HC-Emissionen bei Ottomotoren werden elektrisch oder brennerbeheizte Katalysatoren bzw. HC-Fallen entwickelt. Das Aufwand/Nutzen-Verhältnis dieser Techniken ist nicht sehr hoch. Bis zur Serieneinführung ist noch sehr viel Entwicklungsarbeit zu leisten.

Bei der Verminderung der Partikeln in dieselmotorischem Abgas durch Partikelfilter ist zur Zeit noch keine Serienlösung in Sicht.

Die chemische Umwandlung von Schadstoffen in Abgasen ist also in der Zukunft mit klassischen chemischen Verfahren wahrscheinlich nicht ausreichend lösbar.

Eine Abgastechnologie auf Basis elektrischer Entladungen ermöglicht sowohl eine CO₂-Verminderung wie auch das Erreichen zukünftiger Grenzwerte und könnte darüber hinaus Deutschland von Rohstoffeinfuhren entlasten und zugleich als Technologiestandort stärken.

Es ist bereits vorgeschlagen worden, Abgase mittels Gasentladung zu reinigen (DE-A 34 14 121). Gepulste elektrische Entladungen ("Funkenregen") stellen eine effektive nicht-klassische Methode zur Stimulation chemischer Reaktionen in Gasgemischen dar. In diesen Entladungen induzieren Stöße mit hochenergetischen Elektronen eine Radikalbildung und die Umsetzung der Schadstoffmoleküle. Es ist auch bekannt, daß bei derartigen Verfahren Partikel wie Rußteilchen elektrostatisch aufgeladen und beispielsweise in einem Ölfilm (DE-A 40 17 120) oder auf einer entgegengesetzt geladenen Oberfläche (DE-A 34 24 196) aufgefangen werden.

Allerdings treten bei Verfahren zur Reinigung von Abgasen, die ausschließlich mittels Gasentladungen arbeiten, Nachteile auf. Viele der chemischen Reaktionen werden durch Elektronenstoß aus dem Plasma initiiert, z.B. durch Bildung chemisch aktiver Radikale, und laufen danach als konventionelle Reaktionskette ab. Die für Umsetzungen in dieser Reaktionskette erforderliche Energie steht teilweise jedoch nicht zur Verfügung. Auch ist es möglich, daß die chemisch aktive Spezies in unerwünschter Weise weiter reagiert. Zur Verbesserung der Umsetzrate wurde deshalb bereits vorgeschlagen, Reduktionsmittel in die Reaktionszone einzuleiten (DE-A 34 14 121). Ein derartiges Verfahren ist jedoch zumindest für die Reinigung von Kraftfahrzeugabgasen ungeeignet. Darüber hinaus ist es ökologisch und ökonomisch ungünstig, zusätzliche Chemikalien einsetzen zu müssen.

**Aufgabe** der Erfindung ist es, ein Gasentladungsverfahren bereitzustellen, das die Umsatzrate der vorhandenen Schadstoffe im Abgas stark erhöht.

Diese Aufgabe wird dadurch gelöst, daß ein Verfahren zum Reinigen von Abgasen gemäß Anspruch 1 bereitsgestellt wird. Eine mit dem Verfahren arbeitende Vorrichtung umschreibt Anspruch 10. Überraschenderweise wurde festgestellt, daß durch Kombination eines Katalysators mit einer Gasentladung im Abgasstrom wirkungsvoll die nicht-thermische plasmachemische Umsetzung mit. der thermodynamisch bestimmten katalytisch unterstützten Reaktionskinetik vereint wird, wenn die Merkmale des Anspruchs 1 erfüllt sind.

Bei der Dissoziation von Schadstoffen durch Nichtgleichgewichtsplasmen induzieren Stöße mit hochenergetischen Elektronen eine Radikalbildung und die Umsetzung der Schadstoffmoleküle. Durch die Elektronen werden effektive Zersetzungtemperaturen von 10000 bis 100000 °K (k_{*B*}T=1 eV bis 10 eV) erreicht. Da in den gepulsten Entladungen hauptsächlich die Elektronen die Energie aufnehmen, kommt es dennoch nur zu einer vernachlässigbaren Aufheizung des Gases. Die Effektivität der Reaktionsprozesse wird gesteigert.

Neben dem primären Einsatzgebiet der Erfindung, dem Verkehrsmittel und insbesondere dem Kraftfahrzeug, kann das Verfahren auch bei Luftschadstoffen aus Stationärmotoren, Schiffen, Bahnantrieben, Kraftwerken oder aus der Industrie angewendet werden.

In Entladungen bei Atmosphärendruck, wie er z.B. im Abgasstrang eines Kraftfahrzeugs vorliegt, spielen Wandprozesse eine wesentliche Rolle. Deshalb wird Katalysatormaterial im Gasentladungsraum bereitgestellt. Dabei werden solche chemischen Reaktionen unterstützt, die durch Elektronenstoß aus dem Plasma zwar initiiert werden, aus kinetischen Gründen jedoch erst in der Phase nach der kurzzeitigen Entladung, d.h. verzögert ablaufen. Das Katalysatormaterial beschleunigt diese Umsetzung, und der nächste Entladungspuls kann bereits nach kürzerer Zeit erfolgen. Geeignete Katalysatormaterialien sind darüber hinaus in der Lage, selektiv den Ablauf bestimmter Reaktionskanäle zu beschleunigen. Andere, unerwünschte Folgereaktionen werden vom Katalysator nicht erleichtert und werden somit relativ zu den erwünschten unterdrückt.

Bisher scheiterte der Einsatz konventioneller Katalysatoren zur Abgasreinigung häufig an einer Kontamination der Katalysatoroberfläche durch Ablagerungen aus dem Abgas, wie z.B. Ruß, SOF (löslicher Kohlenwasserstoffanteil der Partikelphase) oder Kondenswasser. In einer Ausgestaltung des Verfahrens können deshalb die Verbrennung dieser Stoffe beschleunigt und Ablagerungen entfernt werden. Dies kann in oxidierender Atmosphäre oder unter inerten oder sogar reduzierenden Bedingungen stattfinden; letztere Alternative nämlich dann, wenn dazu Sauerstoff-Radikale durch die Entladung erzeugt werden.

Insgesamt kann durch Kombination von Gasentladung und Katalysator eine bessere reaktive Umsetzung der Schadstoffe im Abgas erreicht werden, als mit jedem der beiden Verfahren alleine. Durch eine zusätzliche Gasentladung wird der Einsatz mancher Katalysatormaterialien, die bisher aufgrund technischer Schwierigkeiten nicht einsetzbar waren, überhaupt erst möglich.

Plasmachemische Umsetzungen werden heute vornehmlich in Niederdruckplasmen eingesetzt. Beispiele hierfür sind die Plasmapolymerisation und die plasmaunterstützte Abscheidung aus der Gasphase (plasma enhanced chemical vapour deposition PECVD oder kurz Plasma-CVD). Vereinzelt werden solche Prozesse auch in Hochdruck-Bogenentladungs- oder Mikrowellenplasma-Verfahren durchgeführt. Der Nachteil dieser zeitlich konstant brennenden Entladungen ist jedoch ihre geringe räumliche Ausdehnung und eine nennenswerte thermische Erwärmung des Gases.

Eine Gasentladung, die großflächig arbeitet, ist die Barrierenentladungen bei hochfrequenter Wechselspannung. Bei dieser, auch als dielektrisch behinderte Entladung oder stille Entladung bekannten Entladungsform werden durch Trennung mindestens einer der Elektroden vom Entladungsraum durch eine dielektrische Barriere zeitlich begrenzte Einzelentladungen erreicht, die homogen über die gesamte Elektrodenfläche verteilt sind.

Charakteristisch für diese Hochdruckentladungen ist, daß der Übergang in eine thermische Bogenentladung verhindert wird. Die nichtthermische Elektronen-Energieverteilung basiert darauf, daß lokal die Dauer der Thermalisierung groß ist gegen die Dauer des einzelnen Entladungsereignisses. Damit sind nichtthermische Entladungen in Hochdruckplasmen auf Entladungsdauern von wenigen 10 nsec beschränkt, und zeitlich schnell ablaufende Prozesse dominieren die Abläufe. Die Entladung bricht ab, bevor die bei der Zündung entstehenden höherenergetischen Elektronen (1-10 eV) durch Thermalisierung ihre Energie an das umgebende Gas abgeben.

Es ist bevorzugt, daß die Gasentladung im Abgas bei ungefähr Atmosphärendruck stattfindet, obwohl, je nach gewähltem Verfahren, selbstverständlich auch andere Drücke herrschen können. Es ist ferner bevorzugt, daß die elektrischen Entladungen so kurzzeitig sind, daß ihre Dauer kurz gegen die Thermalisierungszeit ist.

Als Beispiele für katalytisches Material seien Metalloxide, Keramiken und Zeolithe, die entweder allein oder in Kombination miteinander oder in Kombination mit anderen Dielektrika verwendet werden können, genannt.

Das Abgas kann im ganzen oder zum Teil in den den Katalysator enthaltenden oder von ihm gebildeten Räumen zur Entladung gebracht werden. Die Gasentladung kann in mehreren Gasentladungszonen erfolgen, wobei die verschiedenen Zonen unterschiedlicher Anregungsenergie, Anregungsspannung, Anregungsfrequenz und/oder unterschiedlichen Spannungsformen ausgesetzt sein können. Auch kann die Entladung in mindestens einer Entladungszone zeitlich intermittierend sein, d. h. periodisch an- und abgeschaltet werden. In einer weiteren Ausführungsform kann die einzige oder eine Zone einer Anregungsfrequenz-Mischung ausgesetzt sein.

Die Vorrichtung zur Durchführung des erfindungsgemäßen Verfahrens (Anspruch 10) enthält den Katalysator in einer Form, die der jeweils gewählten Art der Gasentladung angepaßt ist. Z.B. können die Wände des Reaktionsraums mit dem katalytischem Material beschichtet sein. Damit stiller Entladung gearbeitet wird, eignet sich die Beschichtung der Dielektrikumsoberflächen im Gasentladungsbereich, z.B. durch Plasmaspritzen oder die Verwendung des Katalysators als Dielektrikum in der Entladungsanordnung.

Der Katalysator kann in Form von porösem oder körnigem Material, als Granulat oder in einer anderen Form, in der das Katalysatormaterial eine große Oberfläche besitzt, beispielsweise als Netz oder Faser, vorliegen. Der Katalysator kann als weitere Oberfläche(n) ohne elektrische Funktion im Gasentladungsraum ausgebildet sein. Alternativ kann die Entladung in die Hohlräume des porösen oder körnigen Materials gebildet werden. In einer anderen Ausführungsform können in den Gasentladungsbereich Kapillaren aus katalytischem, elektrisch isolierendem Material eingebracht sein, das zur Ausbildung einer Oberflächen- oder Kapillarentladung genutzt wird.

Es ist sinnvoll, daß mehrere der vorgenannten Ausgestaltungen des Katalysators nebeneinander vorhanden sind.

Die vorliegende Erfindung umfaßt Ausführungsformen, in denen nicht nur die Gasentladung in Gegenwart von Katalysator erfolgt. Es ist auch möglich, daß die Gasentladung teilweise in vom Katalysator gebildeten Hohlräumen gezündet wird. Auch können Gasentladungsbereiche, die Katalysator enthalten, mit solchen verbunden werden, die keinen Katalysator enthalten.

Beispiele für erfindungsgemäße Vorrichtung:

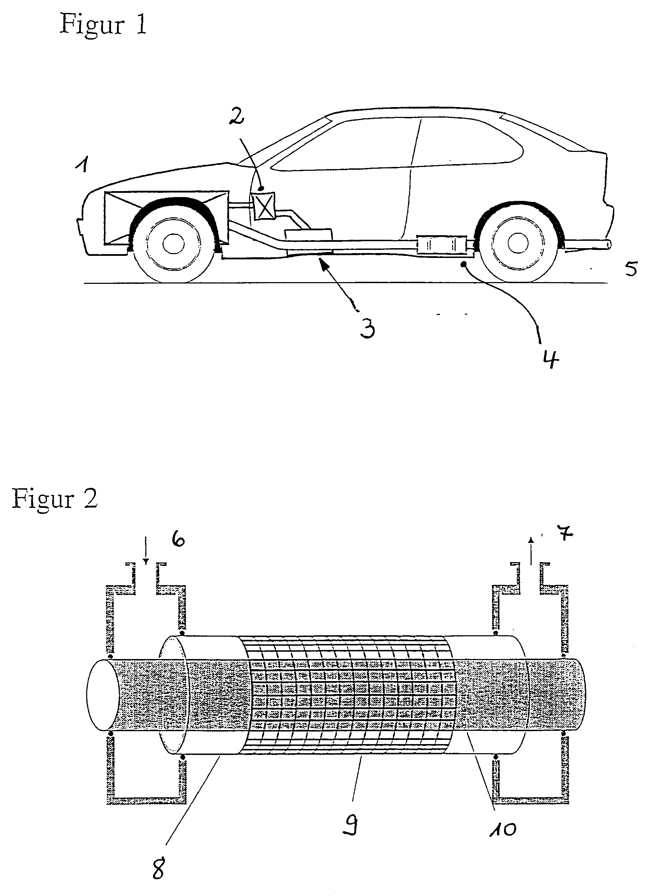

**Figur 1** zeigt eine schematische Darstellung des Abgasstranges eines Kraftfahrzeuges. Die Vorrichtung zur Erzeugung der katalytisch unterstützten Gasentladung an der Stelle eines vorhandenen oder zusätzlichen Auspufftopfes wird vom zu behandelnden Abgas durchströmt. In Figur 1 gibt das Bezugszeichen 1 den Motor an, das Vorschaltgerät ist mit 2 bezeichnet. Der mit 3 bezeichnete Pfeil weist auf die Abgasreinigung mit Gasentladung und Katalysator hin, mit 4 ist der Auspufftopf bezeichnet und mit 5 der Auspuff.
Der Bereich der Gasentladung ist **in Figur 2** vergrößert dargestellt. Im gezeigten Ausführungsbeispiel wird eine Barrierenentladung im Ringspalt zwischen zwei koaxialen Rohren eingesetzt. Diese dielektrischen Rohre trennen die metallischen Elektroden vom Entladungsraum. Das Abgas strömt durch den Entladungsraum und wird dabei der Gasentladung ausgesetzt. In der hier gezeigten Ausführungsform sind die dem Abgas zugewandten Seiten des Dielektrikums (hier Quartz) mit dem Katalysator beschichtet. Die Bezugsziffern bedeuten: 6 bezeichnet den Gaseinlaß, 7 den Gasauslaß, 8 eine dielektrische Barriere (Quartzrohr), 9 ein Drahtnetz (äußere Elektrode), 10 die innere Elektrode.

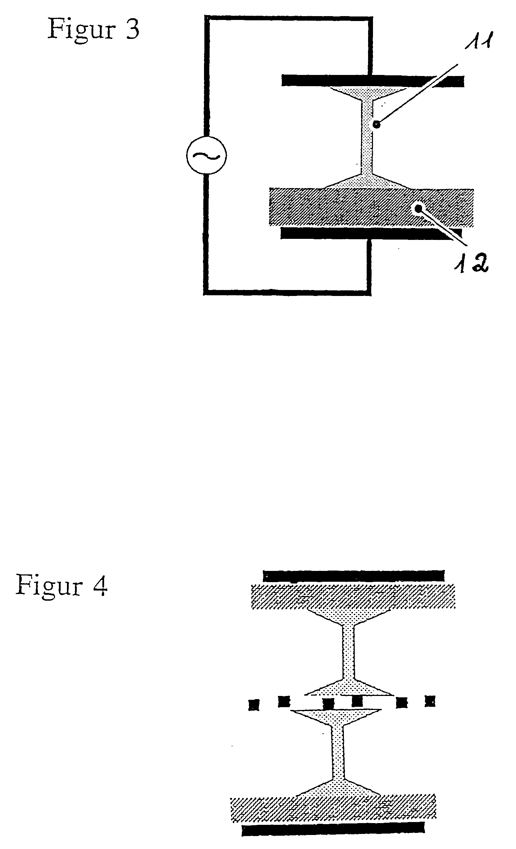

**Figur 3** enthält eine abgewandelte Form der Barrierenentladung, bei der nur eine der metallischen Elektroden von einem Dielektrikum bedeckt ist. Mit 12 ist die dielektrische Barriere bezeichnet. Bezugsziffer 11 weist auf das Entladungsfilament. Die Barrierenentladung wird typisch bei 5 kV und 150 kHz bewirkt.
**In der Figur 4** befindet sich ein katalytisches Zusatzmaterial, als Netz ausgeführt, im Entladungsraum. Die zur Verfügung stehende Katalysatoroberfläche wird so vergrößert, und die elektrische Leitfähigkeit des Materials spielt nur eine geringe Rolle.

## Patentansprüche

Als weiteres Beispiel sei genannt, daß eine Platten- oder Wabenstruktur aus keramischem Material mit Zeolithen beschichtet wird. Im Zwischenraum der Platten bzw. in den Öffnungen der Wabenstruktur wird eine Gasentladung gezündet. Hochenergetische Ladungsträger aus der Gasentladung dringen in die Poren des Zeolithen ein und deponieren dort die für das Ablaufen der Reaktion erforderliche Energie.

Die Erfindung betrifft ein Verfahren zur Abgasreinigung, basierend auf elektrischer Gasentladung, wobei das Abgas zusätzlich dem Kontakt mit katalytischen Material ausgesetzt wird, das ein keramischer Stoff oder Zeolith ist.

1. Verfahren zum Reinigen von Abgasen, wobei man die Abgase
- einer elektrischen Gasentladung unterwirft, wobei mindestens eine der Elektroden durch eine dielektrische Barriere vom Entladungsraum getrennt ist,
und
- dem Kontakt mit katalytischem Material aussetzt,
**dadurch gekennzeichnet**,
daß katalytisches Material auf dem Dielektrikum aufgebracht ist oder das Dielektrikum darstellt und/oder ein Metalloxid, eine Keramik oder ein Zeolith oder eine Mischung hiervon auf mindestens einer Elektrode aufgebracht ist.

2. Verfahren nach Anspruch 1, **dadurch gekennzeichnet**, daß die Gasentladung des Abgases bei annähernd Atmosphärendruck stattfindet.

3. Verfahren nach einem der Ansprüche 1 oder 2, **dadurch gekennzeichnet**, daß die Gasentladung in oxidierender Atmosphäre stattfindet.

4. Verfahren nach einem der Ansprüche 1 oder 2, **dadurch gekennzeichnet**, daß die Gasentladung in inerter oder reduzierender Atmosphäre stattfindet.

5. Verfahren nach Anspruch 3 oder 4, **dadurch gekennzeichnet**, daß die Anregungsenergie, Anregungsspannung, Anregungsfrequenz oder Mischung von Anregungsfrequenzen der Gasentladung so gewählt wird, daß bei der Entladung Radikale, z. B. Sauerstoffradikale, erzeugt werden.

6. Verfahren nach einem der voranstehenden Ansprüche, **dadurch gekennzeichnet**, daß als Gasentladung kurzzeitige elektrische Entladungen eingesetzt werden, deren Dauer kurz gegen die Thermalisierungszeit ist.

7. Verfahren nach einem der voranstehenden Ansprüche, **dadurch gekennzeichnet**, daß die Gasentladung ganz oder teilweise in vom Katalysator gebildeten Hohlräumen gezündet wird.

8. Verfahren nach einem der voranstehenden Ansprüche, **dadurch gekennzeichnet**, daß die Entladung in mindestens zwei Entladungszonen stattfindet und in den verschiedenen Zonen mit Hilfe unterschiedlicher Anregungsenergien, unterschiedlicher Anregungsspannungen, unterschiedlicher Anregungsfrequenzen, unterschiedlicher Anregungsfrequenzmischungen oder unterschiedlicher Spannungsformen angeregt wird.

9. Verfahren nach einem der voranstehenden Ansprüche, **dadurch gekennzeichnet**, daß die Entladung in mindestens einer Entladungszone zeitlich intermittierend ist.

10. Vorrichtung zur Abgasreinigung, wobei man die Abgase einer elektrischen Gasentladung unterwirft und dem Kontakt mit katalytischem Material aussetzt, umfassend einen Bereich zur elektrischen Gasentladung, in welchem mindestens eine der Elektroden durch eine dielektrische Barriere vom Entladungsraum getrennt ist, wobei katalytisches Material auf dem Dielektrikum aufgetragen ist oder das Dielektrikum darstellt und/oder ein Metalloxid, eine Keramik, ein Zeolith oder eine Mischung hiervon auf mindestens einer Elektrode aufgebracht ist.

11. Vorrichtung nach Anspruch 10, **dadurch gekennzeichnet**, daß mindestens eine der Elektroden im Entladungsbereich aus Katalysatormaterial besteht.

12. Vorrichtung zur Abgasreinigung nach einem der Ansprüche 10 oder 11, **dadurch gekennzeichnet**, daß Katalysator mit einer großen Oberfläche wie poröser, granulatfömiger, netzförmiger und/oder faserförmiger Katalysator im Bereich, der Katalysatormaterial enthält, angeordnet ist.

13. Vorrichtung zur Abgasreinigung nach einem der Ansprüche 10 bis 12, **dadurch gekennzeichnet**, daß im Gasentladungsbereich Kapillaren aus katalytischem, elektrisch isolierendem Material vorhanden sind, die zur Ausbildung einer Oberflächen- oder Kapillarentladung geeignet sind.

14. Vorrichtung zur Abgasreinigung nach einem der Ansprüche 10 bis 13, **dadurch gekennzeichnet**, daß der Gasentladungsbereich mindestens zwei getrennte Gasentladungsbereiche umfaßt und/oder daß der Bereich, der Katalysatormaterial enthält, mindestens zwei getrennte Bereiche, die Katalysatormaterial enthalten, umfaßt.

15. Vorrichtung zur Abgasreinigung nach einem der Ansprüche 10 bis 14, **dadurch gekennzeichnet**, daß mindestens ein Katalysator enthaltender Bereich und mindestens ein Gasentladungsbereich hintereinander oder nebeneinander angeordnet sind.

## Claims

1. A method of purifying exhaust gases wherein
- the gases are subjected to an electric discharge, at least one electrode being separated from the discharge chamber by a dielectric barrier,
and
- the exhaust gases are subjected to contact with catalytic material,
**characterised in that**
catalytic material is applied to the dielectric or constitutes the dielectric and/or a metal oxide, a ceramic or a zeolite or a mixture thereof is applied to at least one electrode.

2. A method according to claim 1, **characterised in that** the discharge of the exhaust gas occurs at approximately atmospheric pressure.

3. A method according to claim 1 or 2, **characterised in that** the gas discharge occurs in an oxidising atmosphere.

4. A method according to claim 1 or 2, **characterised in that** the gas discharge occurs in an inert or reducing atmosphere.

5. A method according to claim 3 or 4, **characterised in that** the excitation energy, excitation voltage, excitation frequency or mixture of excitation frequencies of the gas discharge are so chosen that radicals, for example oxygen radicals, are generated during the discharge.

6. A method according to any of the preceding claims, **characterised in that** the gas discharge consists of short electric discharges having a duration which is short compared with the thermalisation time.

7. A method according to any of the preceding claims, **characterised in that** the gas discharge is entirely or partly ignited in cavities formed by the catalyst.

8. A method according to any of the preceding claims, **characterised in that** the discharge occurs in at least two discharge zones and is excited in the various zones by various excitation energies, various excitation voltages, various excitation frequencies, various mixtures of excitation frequencies or various forms of voltage or tension.

9. A method according to any of the preceding claims, **characterised in that** the discharge in at least one discharge zone is intermittent.

10. A device of purifying exhaust gases, wherein the gases are subjected to an electric discharge and to contact with catalytic material, the device comprising a region for electric gas discharge in which at least one electrode is separated from the discharge chamber by a dielectric barrier, wherein catalytic material is applied to the dielectric or constitutes the dielectric and/or a metal oxide, a ceramic, a zeolite or a mixture thereof is applied to at least one electrode.

11. A device according to claim 10, **characterised in that** at least one electrode in the discharge region is of catalyst material.

12. A device for purifying exhaust gas according to claim 10 or 11, **characterised in that** a catalyst having a large surface area, for example porous or in the form of a granulate, a network, and/or fibres is disposed in the region containing catalyst material.

13. A device for purifying exhaust gases according to any of claims 10 to 12, **characterised in that** capillaries made of catalytic electrically insulating material are present in the gas discharge region and are suitable for forming a surface or capillary discharge.

14. A device for purifying exhaust gas according to any of claims 10 to 13, **characterised in that** the gas discharge region comprises at least two separate gas discharge regions and/or the region containing catalyst material comprises at least two separate regions containing catalyst material.

15. A device for purifying exhaust gas according to any of claims 10 to 14, **characterised in that** at least one region containing catalyst and at least one gas discharge region are disposed behind or alongside one another.

## Revendications

1. Procédé d'épuration de gaz d'échappement, selon lequel on soumet les gaz d'échappement à une décharge gazeuse électrique, au moins l'une des électrodes étant séparée de l'espace de décharge par une barrière diélectrique, et on les expose au contact d'un matériau catalytique,
**caractérisé en ce que**
du matériau catalytique est appliqué sur le diélectrique ou constitue le diélectrique et/ou un oxyde métallique, une céramique ou une zéolithe ou un mélange de ces éléments est appliqué sur au moins une électrode.

2. Procédé selon la revendication 1, **caractérisé en ce que** la décharge gazeuse du gaz d'échappement a lieu approximativement à la pression atmosphérique.

3. Procédé selon l'une des revendications 1 et 2, **caractérisé en ce que** la décharge gazeuse a lieu dans une atmosphère oxydante.

4. Procédé selon l'une des revendications 1 et 2, **caractérisé en ce que** la décharge gazeuse a lieu dans une atmosphère inerte ou réductrice.

5. Procédé selon la revendication 3 ou 4, **caractérisé en ce que** l'on choisit l'énergie d'excitation, la tension d'excitation, la fréquence d'excitation ou un mélange de fréquences d'excitation de la décharge gazeuse de telle sorte que des radicaux, par exemple des radicaux d'oxygène, sont produits lors de la décharge.

6. Procédé selon l'une des revendications précédentes, **caractérisé en ce que** l'on utilise comme décharge gazeuse de brèves décharges électriques dont la durée est courte par rapport au temps de thermalisation.

7. Procédé selon l'une des revendications précédentes, **caractérisé en ce que** l'on allume la décharge gazeuse complètement ou partiellement dans des cavités formées par le catalyseur.

8. Procédé selon l'une des revendications précédentes, **caractérisé en ce que** la décharge a lieu dans au moins deux zones de décharge et en ce que l'on effectue l'excitation dans les différentes zones à l'aide d'énergies d'excitation différentes, de tensions d'excitation différentes, de fréquences d'excitation différentes, de mélanges de fréquences d'excitation différents ou de formes de tensions différentes.

9. Procédé selon l'une des revendications précédentes, **caractérisé en ce que** la décharge est intermittente dans au moins une zone de décharge.

10. Dispositif d'épuration de gaz d'échappement, dans lequel les gaz d'échappement sont soumis à une décharge gazeuse électrique et sont exposés au contact de matériau catalytique, comprenant une zone qui est destinée à la décharge gazeuse électrique et dans laquelle au moins l'une des électrodes est séparée de l'espace de décharge par une barrière diélectrique, du matériau catalytique étant appliqué sur le diélectrique ou constituant le diélectrique et/ou un oxyde métallique, une céramique, une zéolithe ou un mélange de ces éléments étant appliqué sur au moins une électrode.

11. Dispositif selon la revendication 10, **caractérisé en ce qu'**au moins l'une des électrodes dans la zone de décharge est en matériau catalyseur.

12. Dispositif d'épuration de gaz d'échappement selon l'une des revendications 10 et 11, **caractérisé en ce qu'**un catalyseur ayant une grande surface, tel qu'un catalyseur poreux, sous forme de granulés, sous forme de réseaux et/ou sous forme de fibres, est placé dans la zone qui contient un matériau catalyseur.

13. Dispositif d'épuration de gaz d'échappement selon l'une des revendications 10 à 12, **caractérisé en ce qu'**il y a dans la zone de décharge gazeuse des tubes capillaires en un matériau catalytique et isolant électrique qui conviennent à la formation d'une décharge superficielle ou capillaire.

14. Dispositif d'épuration de gaz d'échappement selon l'une des revendications 10 à 13, **caractérisé en ce que** la zone de décharge gazeuse comprend au moins deux zones de décharge gazeuse séparées et/ou en ce que la zone qui contient un matériau catalyseur comprend au moins deux zones séparées qui contiennent un matériau catalyseur.

15. Dispositif d'épuration de gaz d'échappement selon l'une des revendications 10 à 14, **caractérisé en ce qu'**au moins une zone contenant un catalyseur et au moins une zone de décharge gazeuse sont agencées l'une derrière l'autre ou l'une à côté de l'autre.
